Europäisches Patentamt

European Patent Office

Office européen des brevets

(11) Publication number: **0 317 995 B1**

# EUROPEAN PATENT SPECIFICATION

(45) Date of publication of patent specification: **24.05.95**   (51) Int. Cl.6: **B29C 44/00**, //B29K23/00

(21) Application number: **88119568.9**

(22) Date of filing: **24.11.88**

(54) **Process for preparing foamed article from propylene resin.**

(30) Priority: **25.11.87 JP 297160/87**

(43) Date of publication of application:
**31.05.89 Bulletin 89/22**

(45) Publication of the grant of the patent:
**24.05.95 Bulletin 95/21**

(84) Designated Contracting States:
**DE FR GB**

(56) References cited:
**EP-A- 0 153 706**
**DE-A- 3 602 996**

(73) Proprietor: **KANEGAFUCHI KAGAKU KOGYO
KABUSHIKI KAISHA
2-4 Nakanoshima 3-chome
Kita-ku
Osaka-shi
Osaka-fu 530 (JP)**

(72) Inventor: **Yamaguchi, Kenji
2-3, Wakayamadai
Shimamoto-cho
Mishima-gun
Osaka-fu (JP)**
Inventor: **Tamura, Toru
22-13, Torikaihachibo 1-chome
Settsu-shi
Osaka-fu (JP)**
Inventor: **Maeda, Hirofumi
1-13-15 Shimizudai
Takatsuki-shi
Osaka-fu (JP)**

(74) Representative: **Türk, Gille, Hrabal, Leifert
Brucknerstrasse 20
D-40593 Düsseldorf (DE)**

**Description**

The present invention relates to a process for producing a foamed article of a polypropylen resin in a mold according to the preamble of claim 1. Such articles can be suitably used as cushioning materials or energy-absorbing materials such as core materials for bumpers of cars.

There hitherto have been proposed the following three processes for producing a foamed molding in a mold from pre-expanded particles of an olefin polymer such as polypropylene.

(a) A process for producing a molded article, wherein after pre-expanded particles of a polyolefin are compressed with inorganic gas so that the particles are impregnated with the inorganic gas, the pressure on the compressed particles is reduced, the particles are filled into a mold which can be closed but cannot be sealed while the internal pressure of the particles is not less than 1.18 atm, and the particles are heated by means of a heating medium such as steam so as to be fused and bonded together to give a molded article having the same shape as that of the mold (Japanese Examined Patent Publication No. 22951/1976). EP-A-0 153 706, which has been taken into consideration in the preamble of present claim 1, describes imparting internal pressure to pre-expanded polypropylene particles while charging them into a mold and introducing steam into the mold.

(b) A process for producing a molded article, wherein a mold which can be closed but cannot be sealed is charged with pre-expanded particles of a polyolefin, the particles are heated by means of a heating medium such as steam so as to be fused and bonded together to give a molded article, the molded article is taken out from the mold, and the molded article is aged by heating while the volume of the article is within a range of 70 to 110 % of that of the mold to give a molded article having the same shape as that of the mold (Japanese Unexamined Patent Publication No. 166442/1985).

(c) A process for the manufacture of a foam molding from an olefin polymer by compressing foam particles of the olefin polymer with gas, filling the compressed particles into a closed mold at a pressure such that the compressed particles occupy from 20 to 80 % of their original bulk volume, releasing the gas pressure in the interior of the mold, and heating and welding the particles, wherein after release of the gas pressure, steam is introduced to heat the particles, the steam being introduced in an amount to provide a steam pressure which is equal to or greater than the effective pressure in the mold during introduction of the foam particles, and the steam pressure in the interior of the mold is then released to cause the particles to expand and weld together (British Patent No. 1,560,630).

The above-mentioned processes (a) to (c) have, however, the following defects.

According to the process (a), there is a necessity to apply an internal pressure to pre-expanded particles prior to molding in a mold, and a large cost is required since a large equipment is required for pressuring the pre-expanded particles with inorganic gas.

According to the process (b), since shrinkage and the like generate in the molded article, the article is poor in appearance.

According to the process (c), in order to obtain a molded article having excellent surface appearance, shape stability and the like, there is a necessity to produce a molded article having a high density and a large compressive stress by means of compressing pre-expanded particles with steam so that their bulk volume is from 20 to 60 %, preferably from 30 to 50 % of thier original bulk volume. Accordingly, there is a necessity to increase the pressure of steam applied for heating to fuse and bond the particles together. In case of applying steam having a high pressure, energy, therefore, the cost is increased. In case of operating plural molding machines, there are defects that the pressure of steam in a main pipe widely varies, and thereby, there occurs a fluctuation of bonding between pre-expanded particles molded in each shot and dimensional shrinkage of a molded articles is varied due to the variation of heating temperature.

As mentioned above, there has not yet been proposed a process for preparing a foamed article from pre-expanded particles of a propylene resin in a mold in good productivity, which can provide a molded article having a small dimentional shrinkage, excellent surface appearance, excellent fusibility and no shrinkage. The problem to be solved by the present invention is to provide a process for preparing a foamed article having the above-mentioned excellent properties from pre-expanded particles of a propylene resin in good productivity at low costs and avoiding the necessity of large equipment.

It has been found that this problem can be solved in accordance with the invention by a process for producing a foamed article of a polypropylene resin in a mold without previously holding pre-expanded particles of the polypropylene resin under pressure, which is characterized by the steps comprising

(A) filling pre-expanded particles of a polypropylene resin directly into a mold which can be closed but cannot be sealed at a filling pressure of 1.96 to 4.9 bar G (2.0 to 5.0 kg/cm$^2$G) by compressing the particles, without holding the pre-expanded particles under pressure, and

(B) heating the particles at a steam pressure of not less than 1.76 bar G (1.8 kg/cm²G) so as to fuse and bond the particles together, werehin said steam pressure is lower than said filling pressure. A further embodiment of the invention is defined by the dependent claim 2.

The present invention will be described more detailed with reference to the accompanying drawings, in which:

Fig. 1 is a characteristic graph showing the result of thermal properties of pre-expanded particles of a propylene resin measured by differential scanning calorimetry, which illustrates a manner to obtain a value of heat of fusion $Q_H$ for the peak based on higher melting temperature.

Fig. 2 is a characteristic graph showing the result of thermal properties of a propylene resin (beads A) used in the present invention measured by differential scanning calorimetry, which illustrates an embodiment for measuring the melting temperature $T_M$ of the resin.

Examples of a propylene resin used in the present invention are, for instance, propylene homopolymer, ethylene-propylene random copolymer, ethylene-propylene block copolymer, ethylene-propylene-butene random terpolymer, propylene-vinyl chloride copolymer, propylene-butene copolymer, copolymer of propylene and maleic anhydride. Among them, stereospecific polymers are preferred. These propylene resins can be used alone or in admixture thereof.

Although non-crosslinked propylene resins are preferably used, propylene resins crosslinked by peroxide or radiation can be used. The propylene resins can be used in admixture with other thermoplastic resins so long as the properties of the propylene resin are not impaired. Examples of the other thermoplastic resins are, for instance, low density polyethylene, linear low density polyethylene, polystyrene, polybutene, and an ionomer. For instance, when the propylene resin is used in admixture with low density polyethylene, linear low density polyethylene, polybutene or ionomer, it is preferable that the amount of the thermoplastic resin is from 5 to 20 parts by weight based on 100 parts by weight of the propylene resin. When the propylene resin is used in admixture with polystyrene, it is preferable that the amount of the polystyrene is from 5 to 10 parts by weight based on the propylene resin.

Usually, the propylene resin is previously molten by using, e.g., an extruder, a kneader, a Banbury mixer or a roll and is molded into particles having a desired shape such as cylinder, cylindroid, sphere, cube or rectangul parallelepiped and having an average particle diameter of 0.1 to 10 mm, preferably 0.7 to 5 mm, for easily pre-expanding. The terminology "average particle diameter" is intended to refer to a diameter of a sphere having a volume being equal to that of the polypropylene particle.

It is preferable that the pre-expanded particles of the propylene resin used in the present invention have distinct two melting temperatures when the melting temperatures are analized by means of differential scanning calorimetry (hereinafter referred to as "DSC"). The heat of fusion $Q_H$ for the peak based on the higher melting temperature (the $Q_H$ being measured from the area for the higher melting peak) is from 2.09 to 14.65 kJ/kg (0.5 to 3.5 cal/g), preferably 4.19 to 12.98 kJ/kg (1.0 to 3.1 cal/g).

The present invention is not restricted by the relationship between the two melting temperatures, but it is preferable that the difference between two melting temperatures is 15° to 25°C from the viewpoint that the pre-expanded particles are easily fused together at molding in a mold. The difference between two melting temperatures depends on the molecular structure and heat history of the propylene resin, the amount of a blowing agent, the pressure at expanding, and the like. When the particles of the propylene resin are pre-expanded at the higher melting temperature, the difference between two melting temperatures of the pre-expanded particles is increased. The lower melting temperature is usually within a range of 125° to 155°C and the higher melting temperature is usually within a range of 145° to 175°C. The two melting temperatures are varied due to the kinds of the propylene resin used.

When the heat of fusion $Q_H$ for the peak based on the higher melting temperature is within a range of 2.09 to 14.65 kJ/kg (0.5 to 3.5 cal/g), the pre-expanded particles can be molded to a foamed article having excellent properties required in the present invention. When the heat of fusion for the peak based on the higher melting temperature is more than 14.65 kJ/kg (3.5 cal/g), it is difficult to mold the pre-expanded particles in a mold since the pre-expanded particles are hardly fused and bonded together. On the other hand, when the heat of fusion $Q_H$ is less than 2.09 kJ/kg (0.5 cal/g), although it is possible to mold the pre-expanded particles in a mold, the obtained foamed article has a large dimensional shrinkage and the appearance is deteriorated.

There is no limitation for the method for preparing pre-expanded particles of a propylene resin having a heat of fusion for the peak based on the higher melting temperature $Q_H$ of 2.09 to 14.65 kJ/kg (0.5 to 3.5 cal/g), and usual methods can be applied. For instance, there is a method comprising including a volatile blowing agent into the propylene resin particles in a pressure vessel, dispersing the particles into water with stirring, heating the aqueous dispersion to a predetermined temperature under pressure and releasing the dispersion into a low pressure zone. The heat of fusion $Q_H$ depends on the molecular structure of the propylene resin, and in general, the higher the expansion temperature is, the smaller the heat of fusion $Q_H$ of the pre-expanded particles of the propylene resin is.

In the above method, when the aqueous dispersion is released at a temperature (expansion temperature) within a range of about $(T_M + 2)°C$ to $(T_M + 10)°C$ wherein $T_M$ means a melting temperature of the propylene resin, the pre-expanded particles used in the present invention can be easily obtained. The expansion temperature is suitably determined in accordance with the kind of the propylene resin, amount of the blowing agent and the desired expansion ratio of pre-expanded particles.

In the present invention, examples of the volatile blowing agent which is contained into the propylene resin are, for instance, aliphatic hydrocarbons such as propane, butane, pentane and hexane; alicyclic hydrocarbons such as cyclopentane and cyclobutane; halogenated hydrocarbons such as trichloromonofluoromethane, dichlorodifluoromethane, dichlorotetrafluoroethane, trichlorotrifluoroethane, methyl chloride, methylene chloride and ethyl chloride. The blowing agent can be used alone or in admixture thereof. The amount of the blowing agent is not particularly limited and is suitably decided according to the desired expansion ratio of the pre-expanded particles of the propylene resin. Usually, the amount of the blowing agent is 5 to 50 parts by weight based on 100 parts by weight of the propylene resin.

When preparing the aqueous dispersion, a dispersing agent can be used. Examples of the dispersing agent are, for instance, calcium tertiary phosphate, basic magnesium carbonate, basic zinc carbonate, calcium carbonate, and in addition thereto a slight amount of a surface active agent such as sodium dodecylbenzenesulfonate, sodium n-paraffinicsulfonate or sodium α-olefinsulfonate. The amount of the dispersing agent and the surface active agent depends on the kinds of the dispersing agent and the surface active agent and the kinds and the amounts of the propylene resin particles. Usually, the amount of the dispersing agent is from 0.2 to 3 parts by weight per 100 parts by weight of water, and the amount of the surface active agent is from 0.001 to 0.1 part by weight per 100 parts by weight of water.

It is preferable to use the propylene resin particles containing the volatile blowing agent in an amount of 20 to 100 parts by weight per 100 parts by weight of water in order to improve the dispersibility in water.

After the obtained aqueous dispersion is heated under pressure, the aqueous dispersion is released from the vessel into a low pressure zone through an orifice having a hole size of 2 to 10 mm, thereby the propylene resin particles are pre-expanded to give pre-expanded particles of the resin used in the present invention.

As aforementioned, the aqueous dispersion is previously heated to a predetermined expansion temperature under pressure in the pressure vessel. The expansion temperature can not be absolutely determined since the expansion temperature depends on the kinds of the propylene resin and the desired heat of fusion $Q_H$ measured by DSC method for the peak based on the higher melting temperature of the pre-expanded particles of the resin which is selected from 2.09 to 14.65 kJ/kg (0.5 to 3.5 cal/g). The expansion temperature mentioned above is decided from the range of about $(T_M + 2)°C$ to $(T_M + 10)°C$, wherein $T_M$ is a melting temperature measured by DSC method. On the other hand, the expansion pressure is decided in accordance with the desired expansion ratio and is usually from 9.8 to 49 bar G (10 to 50 kg/cm$^2$G).

Any pressure vessel is applicable to the process of the present invention so long as the vessel satisfactorily withstands the above pressure and temperature. An example of the pressure vessel is an autoclave.

The DSC method employed in the present invention for determining the melting temperature is explained below.

As an apparatus for measuring DSC, there can be exemplified usual apparatuses for differential scanning calorimetry such as a DSC-2 calorimeter commercially available from the Perkin-Elmer Corp. and a TAS-100 calorimeter commercially available from Rigaku Denki Kabushiki Kaisha.

The measurement of the melting temperature $T_M$ of the propylene resin and the heat of fusion $Q_H$ for the peak based on the higher melting temperature of the pre-expanded particles is carried out by elevating a temperature at a rate of 10°C/minute with the above-mentioned apparatus with respect to the amount of 1 to 10 mg of the sample thereof.

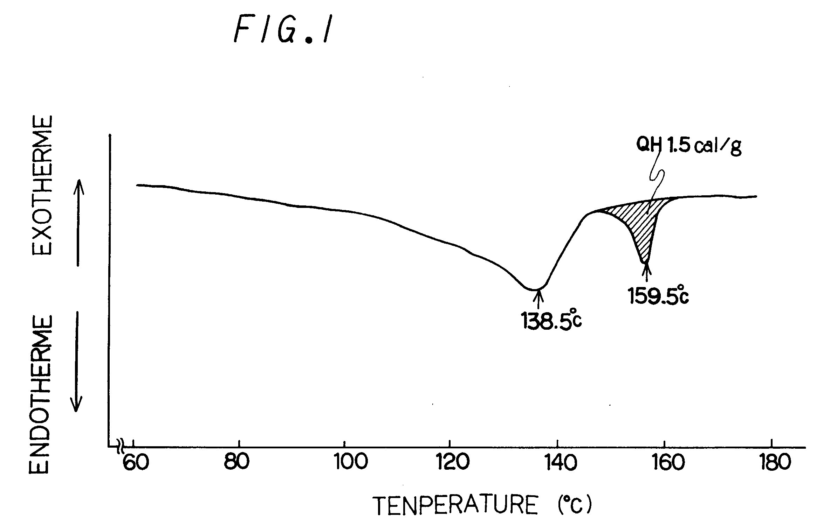

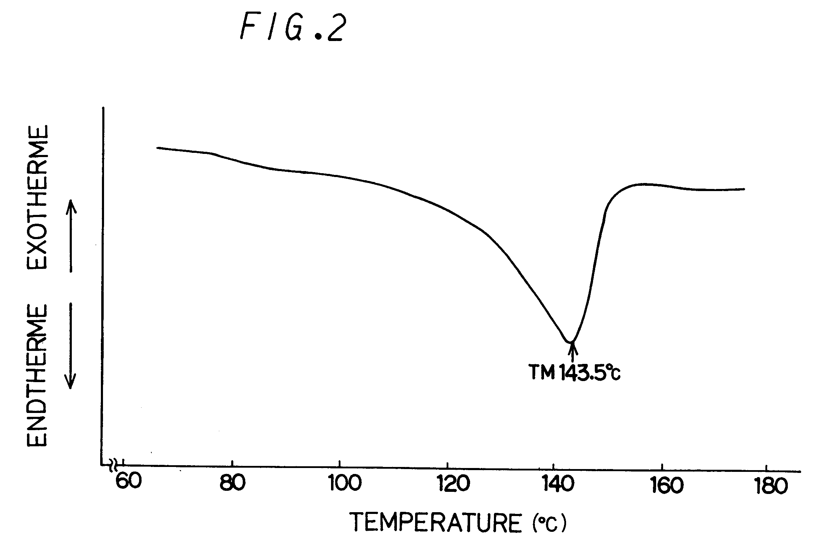

Fig. 2 is a DSC chart of propylene-ethylene random copolymer having an ethylene content of 3.3 % by weight, which illustrates a manner to determine the melting temperature $T_M$ of the copolymer. Also, Fig. 1 is a DSC chart of the pre-expanded propylene resin particles obtained in Example 7, which illustrates a manner to determine the heat of fusion $Q_H$ for the peak based on the higher melting temperature. That is, the straight line A for finding the $Q_H$ is a tangent drawn from a point where a slope of a curve between the higher peak and the lower peak is 0 toward the right shoulder of the higher peak.

Thus obtained pre-expanded particles are compressed by using a pressured gas, which are filled in a mold which can be closed but can not be sealed, steam is introduced into the mold and the pre-expanded

4

EP 0 317 995 B1

particles are fused and bonded together with adjusting the steam pressure so that the steam pressure is smaller than the inner pressure of the mold at filling (hereinafter referred to as "filling pressure") to give a foamed article having a shape almost corrsponding to the mold.

As a compressed gas which is used to give a filling pressure, air is usually used from the viewpoint of cheapness. Also, nitrogen gas, carbonic acid gas, and the like can be used as a compressed gas other than air. The filling pressure depends on the diameters, kinds, the heat of fusion $Q_H$ for the peak based on the higher melting temperature of pre-expanded particles and the like, and is in accordance with the invention from 1.96 to 4.9 bar G (2.0 to 5.0 kg/cm$^2$G), preferably from 2.45 to 3.53 bar G (2.5 to 3.6 kg/cm$^2$G). When the filling pressure is less than 1.96 bar G (2.0 kg/cm$^2$G), shrinkage, sink or wrinkle easily generates on the surface of the foamed article. On the other hand, when the filling pressure is more than 4.9 bar G (5.0 kg/cm$^2$G), the energy therefore the cost for pre-expanding the propylene resin particles or for compressing the pre-expanded particles is increased as well as the pre-expanded particles are unsatisfactorily fused and bonded together.

The compressed pre-expanded particles are filled in a mold, and are subjected to heating and compressing to fuse and bond together. When the filled pre-expanded particles are compressed, steam is employed. The pressure of the steam is controlled so that the pressure is lower than the filling pressure and it is not less than 1.76 bar G (1.8 kg/cm$^2$G). Since the difference between the filling pressure and the steam pressure depends on the heat of fusion $Q_H$ for the peak based on the higher melting temperature, and the like, the difference can not be absolutely determined. However, it is desirable that the difference between the filling pressure and the steam pressure is not less than 0.098 bar G (0.1 kg/cm$^2$G). The heating temperature and heating period of time of a mold are suitably controlled in accordance with the volume of the mold, the kinds of the pre-expanded particles, and the like. Usually, it is preferable that the heating temperature is from 116° to 152°C, more preferably from 120° to 145°C, and it is preferable that the heating time is from 7 to 30 seconds, more preferably from 8 to 20 seconds.

Then, the mold is opened, and a foamed article is removed from the mold.

According to the present invention, a foamed article having excellent surface appearence, excellent fusibility and small dimensional shrinkage can be easily prepared from the propylene resin in good productivity. Furthermore, the cost for molding can be lowered since the pressure of the compressed gas employed for compressing the pre-expanded particles can be lowered.

The present invention is more specifically described and explained by means of the following Examples and Comparative Examples in which all percents and parts are by weight unless otherwise noted.

Examples 1 to 13 and Comparative Examples 1 to 10

A pressure vessel was charged with 100 parts of pellets of a random copolymer of ethylene and propylene (commercially available under the trade name "Noblen" made by Sumitomo Kagaku Kogyo Kabushiki Kaisha, ethylene content: 3.3 %, weight: about 1.8 mg/pellet, melting temperature TM by DSC: 143.5°C) (hereinafter referred to as "bead (A)"), pellets of a random copolymer of ethylene and propylene (commercially available under the trade name "Noblen"; ethylene content: 4.5 %, weight: about 1.8 mg/pellet, melting temperature TM by DSC: 135.5°C) (hereinafter referred to as "bead (B)") or pellets of a block copolymer of ethylene and propylene (commercially available under the trade name "Noblen"; ethylene content: 5.0 %, weight: about 1.8 mg/pellet, melting temperature TM by DSC: 158°C) (hereinafter referred to as "bead (c)"), 20 to 35 parts of dichlorodifluoromethane, 1.5 parts of basic calcium tertiary phosphate powder as a dispersing agent, 0.006 part of sodium n-paraffinic sulfonate and 300 parts of water, and the charged vessesl was heated to a temperature as shown in Table 1. At that time, the inner pressure of the vessel was about 16.66 to 29.4 bar G (17 to 30 kg/cm$^2$G). After that, a valve provided at a lower part of the vessel was opened to release the aqueous dispersion from the vessel to the atmosphere through an orifice having a hole size of 4 mm$\phi$ with adjusting the inner pressure of the vessel so as to be 16.66 to 30.38 bar G (17 to 31 kg/cm$^2$ G) by introducing dichlorodi-fluoromethane into the vessel. The thus obtained pre-expanded particles had an expansion ratio of 15 to 45.

Each of the obtained pre-expanded particles had a heat of fusion $Q_H$ for the peak based on the higher melting temperature, which was determined by DSC, as shown in Table 1.

Then, the pre-expanded particles were filled into a pressure vessel and was compressed with air so that the pressure was equal to a filling pressure as shown in Table 1, and the compressed pre-expanded particles were filled into a block mold having a dimension of 620 mm x 920 mm x 60 mm and were heated with steam having a pressure shown in Table 1 for a period of time shown in Table 1 to give a foamed article. The period of time required for the one shot cycle was shown in Table 1.

5

The properties of the obtained foamed articles such as expansion ratio of foamed article, compression ratio of a foamed article, fusibility, surface appearance, shrinkage and sink, and variation of dimension were measured. The results are shown in Table 1.

[Expansion ratio of foamed article]

The weight of a foamed article which was previously and throughly dried at room temperature was measured, and the volume of the foamed article was measured by sinking into water.

[Expansion ratio of foamed article]

$$= \frac{[\text{Volume of foamed article (cm}^3)] \times [\text{Density of resin (g/cm}^3)]}{[\text{Weight of foamed article (g)}]}$$

[Compression ratio]

The weight of pre-expanded particles which were filled in a mold at a pressure nearly equal to atmospheric pressure was divided by the weight of pre-expanded particles when the pre-expanded particles were compressed in the mold and then the excess gas was removed from the mold, and the compression ratio was calculated in accordance with the following formula.

[Compression ratio (%)]

$$= \left(1 - \frac{\text{Weight of pre-expanded particles filled at atmospheric pressure}}{\text{Weight of pre-expanded particles at compressing}}\right) \times 100$$

When the compression ratio is less than 10 %, the appearance of the surface of the obtained foamed article is deteriorated and sink or shrinkage tends to easily generate in the foamed article. On the other hand, when the compression ratio is more than 60 %, the pre-expanded particles are unsatisfactorily fused and bonded together, and the period of time for one shot cycle is prolonged as well as a molding machine or a mold having a higher pressure resistance is needed.

[Surface appearance]

The surface of a foamed article was observed with naked eyes, and was evaluated according to the following criteria.
- ○: The surface is smooth and little spaces between the particles are observed.
- △: The surface is smooth but spaces between the particles are slightly observed.
- X: The surface is uneven and there are large spaces between the particles.

[Fusibility]

After the surface of a foamed article was cracked with a knife in a depth of about 5 mm, the article was divided along the crack and the divided section was observed. The percentage of the number of the broken particles to the whole number of the particles was calculated.
- ◎: Not less than 80 %

○: From 60 to less than 80 %

Δ: From 50 to less than 60 %

X: Less than 50 %

Usually, the satisfied fusibility for a foamed article was at least 60 %.

[Shrinkage and sink]

The thickness of the thinnest part of a foamed article (theorical thickness of the foamed article: 60 mm) was measured with slide calipers.

○: Not less than 60 mm

Δ : From 58 mm to less than 60 mm

X: Less than 58 mm

[Variation of dimension]

Length and width of each of five samples of the foamed articles (theorical value of thickness: 60 mm, width: 620 mm and length: 920 mm) were measured at four points of width and four points of length of each sample. An average value $(\bar{x})$ and a standard deviation $(\sigma)$ were calculated from the measured values.

○: $3 \sigma/\bar{x} = 0$ to 0.5 %

Δ: $3 \sigma/\bar{x} = 0.51$ to 1.5 %

X: $3 \sigma/\bar{x} =$ not less than 1.5 %

Table 1

| Ex. No. | Kind of bead | Pre-expanded particles | | Molding condition | | | |
| --- | --- | --- | --- | --- | --- | --- | --- |
| | | Pre-expansion ratio | Heat of fusion $Q_H$ (Cal/g) | Filling pressure (kg/cm$^2$G) | Steam pressure (kg/cm$^2$G) | Heating time (Second) | Time required for one shot cycle |
| 1 | A | 40 | 2.5 | 3.0 | 2.5 | 9 | 3 minutes 30 seconds |
| 2 | A | 40 | 1.0 | 2.5 | 2.3 | 9 | 3 minutes 20 seconds |
| 3 | A | 20 | 3.1 | 3.6 | 2.5 | 11 | 3 minutes 30 seconds |
| 4 | A | 20 | 3.1 | 3.2 | 2.5 | 10 | 3 minutes 30 seconds |
| 5 | A | 20 | 3.1 | 2.8 | 2.5 | 10 | 3 minutes 30 seconds |
| 6 | A | 20 | 2.5 | 3.0 | 2.6 | 10 | 3 minutes 35 seconds |
| 7 | A | 20 | 1.5 | 2.8 | 2.5 | 9 | 3 minutes 20 seconds |
| 8 | A | 15 | 2.9 | 3.0 | 2.5 | 13 | 3 minutes 30 seconds |
| 9 | A | 15 | 2.9 | 3.2 | 2.6 | 13 | 3 minutes 40 seconds |
| 10 | B | 45 | 2.0 | 2.2 | 2.0 | 10 | 3 minutes 40 seconds |
| 11 | B | 30 | 2.5 | 2.5 | 2.2 | 13 | 4 minutes |
| 12 | B | 15 | 3.1 | 3.2 | 2.6 | 9 | 3 minutes 40 seconds |
| 13 | C | 20 | 2.0 | 5.0 | 4.9 | 18 | 7 minutes 30 seconds |

- continued -

|  |  | Pre-expanded particles | | Molding condition | | | |
|---|---|---|---|---|---|---|---|
| Com. Ex. No. | Kind of beads | Pre-expansion ratio | Heat of fusion $Q_H$ (Caℓ/g) | Filling pressure (kg/cm$^2$G) | Steam pressure (kg/cm$^2$G) | Heating time (Second) | Time required for one shot cycle |
| 1 | A | 40 | 2.5 | 3.0 | 3.5 | 13 | 3 minutes 55 seconds |
| 2 | A | 40 | 1.0 | 2.5 | 3.0 | 13 | 3 minutes 50 seconds |
| 3 | A | 20 | 3.7 | 3.6 | 2.5 | 11 | 3 minutes 30 seconds |
| 4 | A | 20 | 3.1 | 2.3 | 2.8 | 12 | 3 minutes 20 seconds |
| 5 | A | 20 | 0.1 | 2.8 | 2.5 | 8 | 3 minutes |
| 6 | B | 45 | 2.0 | 2.2 | 2.5 | 14 | 4 minutes 25 seconds |
| 7 | B | 45 | 2.0 | 1.2 | 2.4 | 10 | 3 minutes 20 seconds |
| 8 | B | 30 | 2.5 | 2.5 | 3.0 | 16 | 4 minutes 45 seconds |
| 9 | B | 15 | 3.1 | 2.3 | 2.5 | 10 | 3 minutes 20 seconds |
| 10 | C | 20 | 2.0 | 5.0 | 6.0 | 25 | 8 minutes |

| Ex. No. | Expansion ratio of foamed article (times) | Compression ratio (%) | Surface appearance | Fusibility | Shrinkage and sink | Variation of dimensions |
|---------|---|---|---|---|---|---|
| 1 | 13.5 | 59.5 | ○ | ○ | ○ | ○ |
| 2 | 19.0 | 49.4 | ○ | ○ | ○ | ○ |
| 3 | 11.5 | 40.4 | ○ | ○ | ○ | ○ |
| 4 | 12.5 | 35.6 | ○ | ○ | ○ | ○ |
| 5 | 14.0 | 28.5 | ○ | ○ | ○ | ○ |
| 6 | 13.5 | 30.9 | ○ | ○ | ○ | ○ |
| 7 | 14.0 | 28.5 | ○ | ◎ | ○ | ○ |
| 8 | 13.0 | 12.6 | ○ | ○ | ○ | ○ |
| 9 | 13.0 | 12.6 | ○ | ○ | ○ | ○ |
| 10 | 22.0 | 48.0 | ○ | ◎ | ○ | ○ |
| 11 | 18.0 | 37.6 | ○ | ◎ | ○ | ○ |
| 12 | 11.5 | 22.1 | ○ | ○ | ○ | ○ |
| 13 | 7.5 | 59.4 | ○ | ○ | ○ | ○ |

Physical properties of foamed article

- continued -

| Com. Ex. No. | Expansion ratio of foamed article (times) | Compression ratio (%) | Physical properties of foamed article | | | |
|---|---|---|---|---|---|---|
| | | | Surface appearance | Fusibility | Shrinkage and sink | Variation of dimensions |
| 1 | 13.0 | 59.5 | ○ | ◎ | △ | △ |
| 2 | 18.0 | 49.4 | ○ | ◎ | △ | △ |
| 3 | 11.5 | 40.4 | × | ○ | ○ | △ |
| 4 | 15.5 | 21.4 | △ | ◎ | ○ | △ |
| 5 | 13.0 | 28.5 | ○ | ◎ | × | △ |
| 6 | 22.0 | 48.0 | ○ | ◎ | △ | × |
| 7 | 30.0 | 31.0 | ○ | ◎ | × | △ |
| 8 | 17.5 | 37.6 | ○ | ◎ | × | × |
| 9 | 14.0 | 6.7 | △ | ○ | △ | △ |
| 10 | 7.0 | 6.2 | ○ | ○ | △ | △ |

As apparent from the results shown in Table 1, according to the present invention, the obtained foamed articles are excellent in surface appearance and fusibility, and scarcely have shrinkage and variation of dimension.

According to the process for preparing a foamed article of the present invention, a foamed article having small dimensional shrinkage, excellent fusibility and excellent appearance of surface can be prepared from pre-expanded particles of a propylene resin in good productivity. Further, according to the process of the present invention, the investiment cost for equipments is reduced in comparison with the conventional process comprising compressing pre-expanded particles, filling the compressed particles into a mold, and fusing and bonding the pre-expanded particles together with steam of which pressure is equal to or greater than the filling pressure. Furthermore, the quality of a foamed article prepared according to the process of the present invention are superior to that prepared in accordance with a conventional process.

**Claims**

1. A process for producing a foamed article of a polypropylene resin in a mold without previously holding pre-expanded particles of the polypropylene resin under pressure, characterized by the steps comprising
(A) filling pre-expanded particles of a polypropylene resin directly into a mold which can be closed but cannot be sealed at a filling pressure of 1.96 to 4.9 bar G (2.0 to 5.0 kg/cm$^2$G)by compressing the particles, without holding the pre-expanded particles under pressure, and
(B) heating the particles at a steam pressure of not less than 1.76 bar G (1.8 kg/cm$^2$G) so as to fuse and bond the particles together, wherein said steam pressure is lower than said filling pressure.

2. The process of claim 1, wherein said propylene resin is a polypropylene having distinct two melting temperatures when the melting temperatures are analyzed by differential scanning calorimetry, and the heat of fusion $Q_H$ for the peak based on the higher melting temperature is from 2.09 to 14.65 kJ/kg (0.5 to 3.5 cal/g).

**Patentansprüche**

1. Verfahren zur Herstellung eines geschäumten Gegenstandes (Schaum-Formkörpers) aus einem Polypropylenharz in einer Form ohne vorheriges Halten der vorexpandierten Teilchen aus dem Polypropylenharz unter Druck, dadurch gekennzeichnet, daß es die folgenden Stufen umfaßt:
A) Einfüllen von vorexpandierten Teilchen aus einem Polypropylenharz direkt in eine Form, die geschlossen, jedoch nicht versiegelt werden kann, bei einem Füllungsdruck von 1,96 bis 4,9 bar G (2,0 bis 5,0 kg/cm$^2$ G) durch Komprimieren der Teilchen, ohne die vorexpandierten Teilchen unter Druck zu halten, und
B) Erhitzen der Teilchen bei einem Wasserdampfdruck von nicht weniger als 1,76 bar G (1,8 kg/cm$^2$ G), um die Teilchen zu schmelzen und miteinander zu verbinden, wobei der Wasserdampfdruck niedriger ist als der Füllungsdruck.

2. Verfahren nach Anspruch 1, worin das Propylenharz ein Polypropylen mit zwei ausgeprägten Schmelztemperaturen ist, wenn die Schmelztemperaturen durch Differentialabtastcalorimetrie bestimmt werden, und wobei die Schmelzwärme $Q_H$ für den Peak auf Basis der höheren Schmelztemperatur 2,09 bis 14,65 kJ/kg (0,5-3,5 cal/g) beträgt.

**Revendications**

1. Un procédé de production dans un moule d'un article en mousse de résine de polypropylene sans maintenir au préalable des particules préexpansées de la résine de polypropylène sous pression, caractérisé par les étapes consistant
(A) à charger des particules préexpansées d'une résine de polypropylène directement dans un moule, pouvant être fermé mais non scellé, à une pression de remplissage comprise entre 1,96 et 4,9 bar G (2,0 et 5,0 kg/cm$^2$ G) en comprimant les particules, sans maintenir les particules préexpansées sous pression, et
(B) à chauffer les particules à une pression de vapeur supérieure eu égale à 1,76 bar G (1,8 kg/cm$^2$ G) de façon à fondre et lier les particules ensemble, dans lequel ladite pression de vapeur est inférieure à ladite pression de remplissage

2. Le procédé de la Revendication 1, dans lequel ladite résine de propylène est un polypropylène présentant deux températures de fusion distinctes lorsque les températures de fusion sont analysées par calorimétrie par analyse différentielle, et dans lequel la chaleur de lusion $Q_H$ du pic basée sur la température de fusion la plus élevée est comprise entre 2,09 et 14,65 kJ/kg (0,5 et 3,5 cal/g).

FIG.1

EP 0 317 995 B1

EP 0 317 995 B1

# FIG.2

TM 143.5°C

ENDTHERME ← → EXOTHERME

TEMPERATURE (°C)